(19)

**Europäisches Patentamt**
**European Patent Office**
**Office européen des brevets**

(11) **EP 3 840 381 A1**

(12) **EUROPEAN PATENT APPLICATION**
published in accordance with Art. 153(4) EPC

(43) Date of publication:
**23.06.2021 Bulletin 2021/25**

(21) Application number: **19864103.7**

(22) Date of filing: **25.09.2019**

(51) Int Cl.:
*H04N 19/142* (2014.01)          *H04N 19/176* (2014.01)
*H04N 7/18* (2006.01)          *H04N 5/14* (2006.01)

(86) International application number:
**PCT/CN2019/107936**

(87) International publication number:
**WO 2020/063688 (02.04.2020 Gazette 2020/14)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
**KH MA MD TN**

(30) Priority: **27.09.2018 CN 201811133555**

(71) Applicant: **Suzhou Keda Technology Co., Ltd.**
**Suzhou, Jiangsu 215011 (CN)**

(72) Inventors:
• **SONG, Jiayang**
  **Suzhou, Jiangsu 215011 (CN)**

• **CHEN, Yao**
  **Suzhou, Jiangsu 215011 (CN)**
• **ZHOU, Qiufang**
  **Suzhou, Jiangsu 215011 (CN)**
• **ZHANG, Yong**
  **Suzhou, Jiangsu 215011 (CN)**
• **CAO, Lijun**
  **Suzhou, Jiangsu 215011 (CN)**
• **CHEN, Weidong**
  **Suzhou, Jiangsu 215011 (CN)**

(74) Representative: **Lavoix**
**Bayerstraße 83**
**80335 München (DE)**

(54) **METHOD AND DEVICE FOR DETECTING VIDEO SCENE CHANGE, AND VIDEO ACQUISITION DEVICE**

(57)     Embodiments of the present application provide a method and a device for detecting a video scene changes, and a video capturing device. The method comprises: acquiring an array of scene fluctuations in a first block of a first video code stream; acquiring an array of scene fluctuations in a second block of a second video code stream; judging whether the video scene of the second video code stream is stable based on the array of scene fluctuations in the second block; and detecting the video scene changes by using the array of scene fluctuations in the first block and the array of scene fluctuations in the second block, when the video scene of the second video code stream is stable. The method firstly determines that the detected video scene is stable before detecting that the video scene changes, and realizes detection of the stability of the video scene via the fluctuations of the video scene, which can better eliminate the interference of noise generated by the video capturing device on the judgment of the video scene changes, thereby improving the accuracy of the detection of the video scene changes.

Fig. 1

**Description**

TECHNICAL FIELD

The present application relates to the field of video monitoring, in particular to a method and a device for detecting video scene changes and a video capturing device.

BACKGROUND

In the video surveillance system, the video capturing devices are indispensable equipment to realize scene surveillance. Among them, cameras are widely used. According to the image situation of the current scene, the camera needs to adjust the camera parameters by using algorithms for realizing automatic exposure, automatic focusing, automatic white balance, etc., to ensure that the output image is in a high-quality state, i.e., of high definition, correct exposure and correct color.

In many application scenes of the camera, the shooting target may change, for example, when people enter or leave the scene, and changes in the distance between the target to be shot and the camera and in the proportion of the target to be shot in the picture, all these may lead to image quality problems such as image blur or color distortion. For some typical application scenes of cameras, such as monitoring and video conference, under general circumstances, the contents of the image are usually changed, i.e., the targets to be shot in the image are usually changed, for example, for a surveillance camera on the road, each frame of image may be different from the next frame due to the movement of vehicles and people; and for ordinary outdoor scenes, flowers and trees swing with the wind; in the cases of video conference, people tend to change their sitting postures, or shake their heads and bodies.

In the prior arts, whether the video scene changes is detected through determination according to the statistical information of the video frames, for example, comparing and analysing the brightness values of two adjacent video frames or the definition values of two adjacent video frames to determine whether the video scene changes.

However, during the research of the existing methods for detecting video scene changes, the inventor of the present application finds out that, the video scene change includes not only the obvious changes in the above scenes, but also the interference caused by the noise fluctuation of the camera itself (the degree of noise change); However, the detection method in the prior art judges the interference caused by noise fluctuation as the change of video scene, which leads to the low accuracy in the detection of the video scene changes.

SUMMARY

In view of this, embodiments of the present application provides a method and a device for detecting video scene changes and a video capturing device, so as to solve the problem of low accuracy of the detection of video scene changes.

Therefore, the embodiments of the present application provide the following technical solutions:

A first aspect of the present application provides a method for detecting video scene changes, comprising:

acquiring an array of scene fluctuations in first blocks of a first video code stream, wherein the video scene of the first video code stream is stable, the first video code stream comprises a first preset number of reference video frames, elements of the array of scene fluctuations in the first blocks is quantitatively equal to the first blocks divided from the reference video frames, each of the elements is used for representing the fluctuations of all the first blocks at the same position in all the reference video frames, and the fluctuations are used for representing a change degree of the scene;

acquiring an array of scene fluctuations in second blocks of a second video code stream, wherein the second video code stream comprises a second preset number of watch video frames, elements of the array of scene fluctuations in the second blocks correspond to the second blocks divided from the watch video frames one by one, and each of the elements is used for representing fluctuations of the second blocks at the same position in all the watch video frames;

judging whether the video scene of the second video code stream is stable based on the array of scene fluctuations in the second blocks; and

detecting the video scene changes by using the array of scene fluctuations in the first blocks and the array of scene fluctuations in the second blocks, when the video scene of the second video code stream is stable.

According to the method for detecting video scene changes provided by the embodiment of the present application, whether the video scene is stable is determined by observing the fluctuations in the second block of the video frame before detecting the change of the video scene. That is to say, the detected video scene is determined to be stable before detection of the video scene changes is carried out. This method uses the fluctuation of video scene to detect stability of the video scene, which can better eliminate the interference of noise generated by the video capturing device on the determination of video scene changes and improve the accuracy of detection of the video scene changes.

According to the first aspect, in a first implementation of the first aspect, acquiring an array of scene fluctuations in second blocks of a second video code stream comprises:

> acquiring a second statistical information list, which comprises the second preset number of arrays of second statistical information corresponding to the watch video frames one by one, and the elements of the arrays of the second statistical information, which correspond to the second blocks of the watch video frames one by one, are used for representing scene statistical values of each of the second blocks;
> sequentially extracting elements from all the arrays of the second statistical information corresponding to each of the second blocks; and
> calculating the fluctuation of each of the second blocks by using the extracted elements, to form the array of scene fluctuations in the second blocks.

According to the method for detecting video scene changes provided by the embodiment of the application, the scene change degree corresponding to each second block is calculated by using the scene statistical value of the second block in the watch video frame, so as to facilitate determining whether the video scene is stable by using the scene change degree corresponding to the second block subsequently, and the method has a high accuracy in determination.

According to the first implementation of the first aspect, in the second implementation of the first aspect, the fluctuations of the second blocks are calculated by the following formula:

$$\sigma_{SL_{watch}}(i, j) = \sqrt{\overline{S_{i,j}^{"\,2}} - \overline{S_{i,j}^{"}}^2} \, ,$$

$$\overline{S_{i,j}^{"\,2}} = \frac{\sum_{k=1}^{c_2} S_{k,i,j}^{"\,2}}{c_2} \, , \quad \overline{S_{i,j}^{"}} = \frac{\sum_{k=1}^{c_2} S_{k,i,j}^{"}}{c_2} \, ;$$

wherein

in the above formula, $c_2$ is the second preset number, $S_{k,i,j}^{"}$ is an element in an $i^{th}$ row and a $j^{th}$ column of a $k^{th}$ array of the second statistical information in the second statistical information list, and $\sigma_{SL_{watch}}(i, j)$ is an element in an $i^{th}$ row and a $j^{th}$ column of the array of scene fluctuations in the second blocks.

According to the second implementation of the first aspect, in a third implementation of the first aspect, judging whether the video scene of the second video code stream is stable based on the array of scene fluctuations in the second blocks comprises:

> calculating an average value of all elements in the array of scene fluctuations in second blocks to obtain the fluctuation of the video scene of the second video code stream; and

> judging whether the video scene of the second video code stream is stable based on a magnitude relationship between the fluctuations of the video scene of the second video code stream and a first threshold.

According to the method for detecting video scene changes provided by the embodiment of the application, the video scene stability of the second video code stream is judged by using the average value of all elements in the array of scene fluctuations in second blocks, and the detection efficiency is improved on the premise of ensuring the judgment accuracy.

According to the third implementation of the first aspect, in a fourth implementation of the first aspect, the fluctuation of the video scene of the second video code stream is calculated by the following formula:

$$\sigma_{avg_{watch}} = \frac{\sum_{i=1}^{M} \sum_{j=1}^{N} \sigma_{SL_{watch}}(i, j)}{M \times N}$$

in the formula, M is the number of rows divided from the watch video frame, N is the number of columns divided from the watch video frame, and $\sigma_{avg_{watch}}$ is the fluctuations of the video scene of the second video code stream.

According to the first aspect, in a fifth implementation of the first aspect, detecting the video scene changes by using the array of scene fluctuations in the first blocks and the array of scene fluctuations in the second blocks comprises:

calculating the fluctuation of the video scene of the first video code stream based on the array of scene fluctuations in the first blocks;

calculating an average value of a difference between a first video scene fluctuation and a second video scene fluctuation, wherein the first video scene fluctuation is the fluctuation of the video scene of the first video code stream and the second video scene fluctuation is the fluctuation of the video scene of the second video code stream;

judging whether the calculated average value is greater than a second threshold value;

calculating an absolute value of a difference between the array of scene fluctuations in the first blocks and the array of scene fluctuations in the second blocks when the average value is greater than the second threshold value, to obtain a difference array;

counting the number of values in the difference array greater than the second threshold; and

detecting that the video scene changes when the counted number is greater than a third threshold.

According to the method for detecting video scene changes provided by the application, the first video code stream with stable video scene is used as the standard to judge whether the video scene changes, then whether the second video code stream is stable or not is taken into account. According to the method, in a situation where the video scene is disturbed in a short time and quickly restored to the original state, the video scene is viewed as not have changed, so as to avoid frequently adjusting the parameters of the video capturing device and ensure the stability of the parameters of the video capturing device.

According to the sixth implementation of the first aspect, in a seventh implementation of the first aspect, the fluctuation of the video scene of the first video code stream is calculated by the following formula:

$$\sigma_{avg_{ref}} = \frac{\sum_{i=1}^{M} \sum_{j=1}^{N} \sigma_{SL_{ref}}(i, j)}{M \times N}.$$

In the formula, M is the number of rows divided from the reference video frame, and N is the number of columns divided from the reference video frame, $\sigma_{SL_{ref}}(i, j)$ is an element in an $i^{th}$ row and a $j^{th}$ column of the array of scene fluctuations in the first blocks, and $\sigma_{avg_{ref}}$ is the fluctuation of the video scene of the first video code stream.

According to a second aspect, the present application also provides a device for detecting video scene changes, comprising:

a first acquisition module, configured to acquire an array of scene fluctuations in first blocks of a first video code stream, wherein the video scene of the first video code stream is stable, the first video code stream comprises a first preset number of reference video frames, elements of the array of scene fluctuations in the first blocks is quantitatively equal to the first blocks divided from the reference video frames, each of the elements is used for representing the fluctuations of all the first blocks at the same position in all the reference video frames, and the fluctuations are used for representing a change degree of the scene;

a second acquisition module, configured to acquire an array of scene fluctuations in second blocks of a second video code stream, wherein the second video code stream comprises a second preset number of watch video frames, elements of the array of scene fluctuations in the second blocks correspond to the second blocks divided from the watch video frames one by one, and each of the elements is used for representing fluctuations of the second blocks at the same position in all the watch video frames;

a judging module, configured to judge whether the video scene of the second video code stream is stable based on the array of scene fluctuations in the second blocks; and

a determination module, configured to detect the video scene changes by using the array of scene fluctuations in the first blocks and the array of scene fluctuations in the second blocks, when the video scene of the second video code stream is stable.

The device for detecting video scene changes provided by the embodiment of the present application determines whether the video scene is stable through the fluctuations of the second blocks of the watch video frames before detecting the change of the video scene. That is to say, the detected video scene is determined to be stable, before the detection for the video scene change is carried out. This method uses the fluctuation of video scene to detect the video scene stability, which can better eliminate the interference of noise generated by the video capturing device on the judgment of the video scene changes, improving the accuracy of detection of the video scene changes.

According to a third aspect, an embodiment of the present application also provides a video capture device, which comprises at least one processor; and a memory communicatively connected with the at least one processor, wherein the memory stores instructions executable by the one processor, and the instructions are executed by the at least one processor to cause the at least one processor to execute the method for detecting video scene changes in the above first aspect or any implementation of the first aspect.

According to a fourth aspect, an embodiment of the present application also provides a computer readable storage medium, storing computer instructions thereon, the instructions, when executed by a processor, execute the steps of the method for detecting video scene changes in the above first aspect or any implementation of the first aspect.

BRIEF DESCRIPTION OF THE DRAWINGS

In order to explain the specific embodiments of this present application or the technical solutions in the prior art more clearly, the drawings used in the specific embodiments or the description of the prior art will be briefly introduced below. Obviously, the drawings in the following description are some embodiments of the present application, and other drawings can be obtained by those skilled in the art according to these drawings without delivering creative efforts.

Fig. 1 is a flowchart of a method for detecting video scene changes according to an embodiment of the present application;
Fig. 2 is a flowchart of a method for detecting video scene changes according to an embodiment of the present application;
Fig. 3 is a flowchart of a method for detecting video scene changes according to an embodiment of the present application;
Fig. 4 is a flowchart of a method for detecting video scene changes according to an embodiment of the present application;
Fig. 5 is a structural block diagram of a device for detecting video scene changes according to an embodiment of the present application;
Fig. 6 is a structural block diagram of a device for detecting video scene changes according to an embodiment of the present application;
Fig. 7 is a schematic diagram of the hardware structure of the video capturing device provided by an embodiment of the present application.

DETAILED DESCRIPTION

In order to make the purpose, technical solution and advantages of the embodiments of this present application clearer, the technical solution of the embodiments of this present application will be described clearly and completely with reference to the drawings in the embodiments of the present application. Obviously, the described embodiments are part of rather than all the embodiments of the present application. Based on the embodiments in the present application, all other embodiments obtained by those skilled in the art without creative efforts belong to the protection scope of the present application.

According to an embodiment of the present application, an embodiment of a method for detecting video scene change is provided. It should be noted that the steps shown in the flowchart of the drawings can be executed in a computer system such as a set of computer executable instructions, and although the logical sequence is shown in the flowchart, in some cases, the steps shown or described can be executed in a different order.

It should be noted that an image sensor and an image processing module can be arranged in the video capturing device in the embodiment of the present application, wherein the image sensor is used to acquire video images. The image processing module is used for counting the video images acquired by the image sensor and acquiring statistical information of a plurality of index images. Optionally, the video image of the image processing module is divided into blocks of M rows and N columns (that is, M×N blocks), and each divided block corresponds to the statistical information of one block, because for a statistical index, a frame of image can obtain the scene statistical values of M×N blocks, that is, every video frame corresponds to an M×N statistical information array.

Further, the scene statistics value may be a definition value or a brightness value. When the scene statistical value is the definition value, a frame of image is divided into M×N blocks, and an FV value representing the definition can be counted from each block, that is, each frame of image can obtain an FV array with M rows and N columns in size. Specifically, the definition value is an index to measure the local and overall degree of clarity of a frame of images after filtering, and it is the main data basis of auto-focusing. When the statistical value of the scene is brightness information, a frame of image is divided into M×N blocks, and a Y value representing brightness can be obtained from each block, that is, each frame of image can get a brightness array with M rows and N columns. Specifically, brightness information is obtained by statistic counting, and forms the main data basis of auto-focusing.

It should be noted that the statistical information array of the block corresponding to each frame of video image can be obtained by processing the acquired video image by the image processing module in the video capturing device, or be obtained through processing by other modules or devices, as long as the video capturing device in this embodiment can obtain the statistical information array of the block corresponding to each frame of video image. In addition, the number of blocks divided from each video frame can be specifically set according to the actual situation.

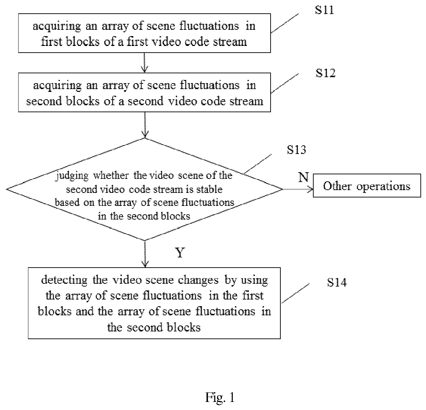

In this embodiment, a method for detecting video scene changes is provided, which can be used in the above-mentioned video capturing device. Fig. 1 is a flow chart of the video capturing device according to an embodiment of the present application. as shown in Fig. 1, the flow includes the following steps:

S11, acquiring an array of scene fluctuations in first blocks of a first video code stream.

wherein the video scene of the first video code stream is stable, the first video code stream comprises a first preset number of reference video frames, elements of the array of scene fluctuations in the first blocks is quantitatively equal to the first blocks divided from the reference video frames, each of the elements is used for representing the fluctuations of all the first blocks at the same position in all the reference video frames, and the fluctuations are used for representing a change degree of the scene.

Specifically, the first video code stream may be a stream with stable video scene determined in advance or a code stream with stable video scene determined in real time. No matter what method is used to determine the stability of the scene of the video code stream, it only needs to guarantee that the video image acquisition device can obtain the array of scene fluctuations in first blocks of the first video code stream with stable video scene.

The first video code stream includes a first preset number of reference video frames (for example, $c_1$, where $c_1$ is a constant greater than 1), and each reference video frame is divided into M×N first blocks, wherein the first video code stream corresponds to the array of scene fluctuations in first blocks, which includes M×N elements, corresponding to the (i, j)$^{th}$ element, where $1 \leq i \leq M$, $1 \leq j \leq N$, that is, the element in the i$^{th}$ row and j$^{th}$ column in the array of scene fluctuations in first blocks, which is used to represent the fluctuations of the (i, j)$^{th}$ first block in all reference video frames.

Optionally, for the fluctuations of the (i, j)$^{th}$ first block in all reference video frames, the statistical values of all the (i, j)$^{th}$ first blocks and all the first blocks of all reference video frames can be used to calculate standard deviation or variance, i.e., the fluctuation of the (i, j)$^{th}$ first block, that is, the element in the i$^{th}$ row and j$^{th}$ column of the array of scene fluctuations in first blocks .

S 12, acquiring an array of scene fluctuations in second blocks of a second video code stream;

wherein the second video code stream comprises a second preset number of watch video frames, elements of the array of scene fluctuations in the second blocks correspond to the second blocks divided from the watch video frames one by one, and each of the elements is used for representing fluctuations of the second blocks at the same position in all the watch video frames.

The second video code stream includes a second preset number (for example, $c_2$, where $c_2$ is a constant greater than 1) of watch video frames, each watch video frame is divided into M×N second blocks, wherein the second video code stream corresponds to the array of scene fluctuations in second blocks, which includes M×N elements, corresponding to the (i, j)$^{th}$ element, that is, the element in the i$^{th}$ row and j$^{th}$ column in the array of scene fluctuations of the second block, which is used to represent the fluctuations of the (i, j)$^{th}$ second block in all watch video frames.

Optionally, for the fluctuations of the (i, j)$^{th}$ second block in all watch video frames, the statistical values of all the (i, j)$^{th}$ second blocks and the statistical values of all the second blocks in all watch video frames can be used to calculate the calculated standard deviation or variance, that is, the fluctuation of the (i, j)$^{th}$ second block, i.e., the element in the i$^{th}$ row and j$^{th}$ column of the array of scene fluctuations in second blocks.

S13, judging whether the video scene of the second video code stream is stable based on the array of scene fluctuations in the second blocks.

After obtaining the array of the scene fluctuation of the second blocks, the video capturing device uses the array to judge whether the video scene of the second video code stream is stable or not, for example, by using the magnitude relationship between each element in the array of scene fluctuations in second blocks and the preset value, or by the magnitude relationship between the average value of all elements in the array of scene fluctuations in second blocks and the preset value, and so on.

When the video scene of the second video code stream is determined to be stable, executing S14; otherwise, other operations can be executed. Optionally, other operations may be returning to S12, and acquiring the array of scene fluctuations of the second blocks again, so as to judge whether the scene of the second video code stream is stable again. Other operations may also be obtaining the array of scene fluctuations in second blocks again after a preset time interval.

S14, detecting the video scene changes by using the array of scene fluctuations in the first blocks and the array of scene fluctuations in the second blocks, when the video scene of the second video code stream is stable.

When the video capturing device determines that the video scene of the second video code stream is stable, because the video scenes of the first video code stream corresponding to the array of scene fluctuations in the first blocks and the second video code stream corresponding to the array of scene fluctuations in the second blocks are all stable, the detection accuracy can be improved based on the array of scene fluctuations in the first blocks and the array of scene fluctuations in the second blocks.

Specifically, when detecting the change of video scene, the difference between the array of scene fluctuations in the first blocks and the array of scene fluctuations in the second blocks can be calculated, before judging the magnitude relationship between the obtained difference array and the preset array. Or the average values of the array of scene fluctuations in the first blocks and the array of scene fluctuations in the second blocks can be calculated respectively, before conducting judgement using the difference between the two average values and so on.

In the method for detecting video scene changes provided by the embodiment of the present application, whether the video scene is stable is determined by observing the fluctuation of the second block of the video frame before detecting the change of the video scene. That is to say, the video scene change detection is performed when the detected video scene is determined to be stable. This method uses the fluctuation of video scene to detect the stability of video scene, which can better eliminate the interference of noise generated by video capturing device on the judgment of video scene change and improve the accuracy of the detection of the video scene changes.

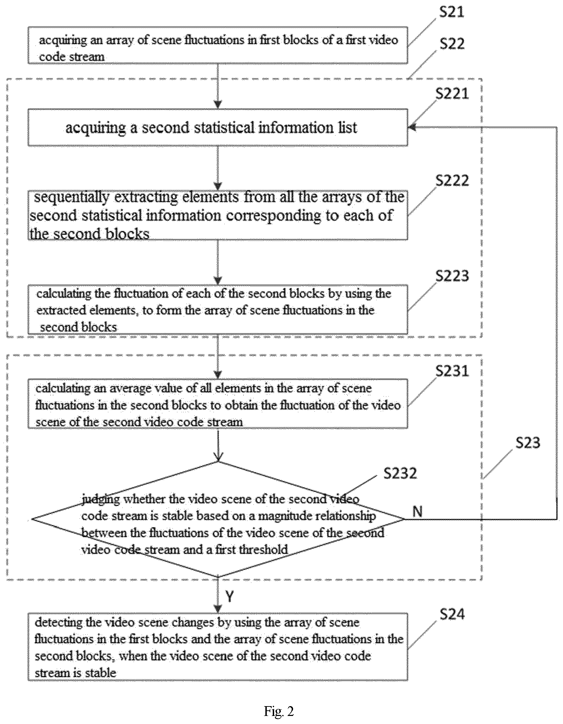

The embodiment of the present application also provides a method for detecting video scene change, as shown in Fig. 2, the method includes:

S21, acquiring an array of scene fluctuations in first blocks of a first video code stream.

Wherein the video scene of the first video code stream is stable, the first video code stream comprises a first preset number of reference video frames, elements of the array of scene fluctuations in the first blocks is quantitatively equal to the first blocks divided from the reference video frames, each of the elements is used for representing the fluctuations of all the first blocks at the same position in all the reference video frames, and the fluctuations are used for representing a change degree of the scene.

Please refer to S11 of the embodiment shown in Fig. 1 in detail, and the details will not be repeated here.

S22, obtaining an array of scene fluctuations in second blocks of a second video code stream.

Wherein the second video code stream comprises a second preset number of watch video frames, elements of the array of scene fluctuations in the second blocks correspond to the second blocks divided from the watch video frames one by one, and each of the elements is used for representing fluctuations of the second blocks at the same position in all the watch video frames.

Specifically, the array of scene fluctuations in the second blocks is obtained by the following steps:

S221, acquiring a second statistical information list.

The second statistical information list includes the second preset number of arrays of second statistical information corresponding to the watch video frames one by one, and the elements of the arrays of the second statistical information, which correspond to the second blocks of the watch video frames one by one, are used for representing scene statistical values of each of the second blocks.

The second video code stream includes a second preset number (for example, $c_2$) of watch video frames, each of which corresponds to an array of second statistical information, and all the arrays of second statistical information are stored in the second statistical information list, which is specifically expressed in the following form:

$$SL_{watch} = \left\{ S_{watch}1,\ S_{watch}2,\ S_{watch}3, \cdots,\ S_{watch}k, \cdots, S_{watch}c_2 \right\},$$

wherein $SL_{watch}$ is the second statistical information list, and $S_{watch}k$ is the $k^{th}$ array of second statistical information in the second statistical information list, that is, the array of second statistical information corresponding to the $k^{th}$ watch video frame in the second video code stream. Because $S_{watch}k$ is a two-dimensional array of M×N, $SL_{watch}$ is a three-dimensional array, and the three dimensions are frames, rows and columns, for example, $S_{watch}(k, i, j)$ is the statistical information of the $i^{th}$ row and $j^{th}$ column of a $k^{th}$ frame in the second statistical information list. Among them, $1 \le k \le c_2$.

Specifically, the video capturing device continuously acquires watch video frames, and fills the array of second statistical information corresponding to the watch video frame in $SL_{watch}$ until c2 is fully filled; if it is not filled fully, the video capturing device waits for and fills the array of second statistical information of the next watch video frame in the $SL_{watch}$.

S222, sequentially extracting elements from all the arrays of the second statistical information corresponding to each of the second blocks.

Specifically, sequentially extracting elements in the array of second statistical information corresponding to the $(i,j)^{th}$ second block in all watch video frames, i.e., sequentially extracting $S_{watch}(1, i, j)$, $S_{watch}(2, i, j),\cdots,S_{watch}(k, i, j),\cdots,S_{watch}(c_2, i, j)$, wherein $1 \le i \le M$, $1 \le j \le N$.

S223, calculating the fluctuation of each of the second blocks by using the extracted elements, to form the array of scene fluctuations in the second blocks.

The video capturing device uses the extracted elements to calculate the fluctuation of each second block, that is, adopts the following formula to calculate the fluctuation of the second blocks:

$$\sigma_{SL_{watch}}(i, j) = \sqrt{\overline{S''(i, j)^2} - \overline{S''(i, j)}^2} \,,$$

$$\overline{S''^2_{i,j}} = \frac{\sum_{k=1}^{c_2} S_{watch}(k,i,j)^2}{c_2} \qquad \overline{S''_{i,j}} = \frac{\sum_{k=1}^{c_2} S_{watch}(k,i,j)}{c_2}$$

where

In the above formula, $c_2$. is the second preset number, $S_{watch}(k, i, j)$ is an element in an $i^{th}$ row and a $j^{th}$ column of a $k^{th}$ array of the second statistical information in the second statistical information list, and $\sigma_{SL_{watch}}(i, j)$ is an element in an $i^{th}$ row and a $j^{th}$ column of the array of scene fluctuations in the second blocks.

Specifically, the array of scene fluctuations in the second blocks can be expressed as follows:

$$\sigma_{SL_{watch}} = \begin{bmatrix} \sigma_{SL_{watch}}(1,1) & \cdots & \sigma_{SL_{watch}}(1,j) & \cdots & \sigma_{SL_{watch}}(1,N) \\ \cdots & \cdots & \cdots & \cdots \\ \sigma_{SL_{watch}}(i,1) & \cdots & \sigma_{SL_{watch}}(i,j) & \cdots & \sigma_{SL_{watch}}(i,N) \\ \cdots & \cdots & \cdots & \cdots \\ \sigma_{SL_{watch}}(M,1) & \cdots & \sigma_{SL_{watch}}(M,j) & \cdots & \sigma_{SL_{watch}}(M,N) \end{bmatrix},$$

wherein $1 \le i \le M,\ 1 \le j \le N$

S23, judging whether the video scene of the second video code stream is stable based on the array of scene fluctuations in the second blocks.

The video capturing device calculates the average value of all elements in the array of scene fluctuations in the second blocks based on the array of scene fluctuations in the second blocks, and judges whether the video scene of the second video code stream is stable or not by using the average value. Specifically, the steps includes:

S231, calculating an average value of all elements in the array of scene fluctuations in the second blocks to obtain the fluctuation of the video scene of the second video code stream.

The video capturing device adopts the following formula to calculate the fluctuations of the video scene of the second video code stream:

$$\sigma_{avg_{watch}} = \frac{\sum_{i=1}^{M} \sum_{j=1}^{N} \sigma_{SL_{watch}}(i, j)}{M \times N}$$

in the formula, M is the number of rows divided from the watch video frame, N is the number of columns divided from the watch video frame, and $\sigma_{avg_{watch}}$ is the fluctuations of the video scene of the second video code stream.

S232, judging whether the video scene of the second video code stream is stable based on a magnitude relationship between the fluctuations of the video scene of the second video code stream and a first threshold.

Specifically, if $\sigma_{avg_{watch}}$ is less than $Th_{\sigma_{watch}}$, the video scene of the second video code stream is determined to be stable, and is otherwise considered as unstable. $Th_{\sigma_{watch}}$ is the first threshold to judge whether the video scene of the second video code stream is stable, which can be a constant and can be set according to the actual situation.

S24 is executed when the video scene of the second video code stream is stable; otherwise, S221 is executed.

S24, detecting the video scene changes by using the array of scene fluctuations in the first blocks and the array of scene fluctuations in the second blocks, when the video scene of the second video code stream is stable. Please refer to S14 of the embodiment shown in Fig. 1 for more detail, and the details will not be repeated here.

Compared with the embodiment shown in Fig. 1, the method for detecting video scene changes provided in this embodiment calculates the degree of scene changes corresponding to each second block by using the scene statistical value of each second block in the watch video frame, facilitating using the degree of scene changes corresponding to the second block to judge whether the video scene is stable or not, and has higher judgment accuracy.

As an optional implementation of this embodiment, in S231, the calculation of weighting can also be performed first, that is, setting a weight array W with a size of M rows and N columns, the same as that of $\sigma_{SL_{watch}}$, and using the weight array W to perform weighting and averaging of $\sigma_{SL_{watch}}$ to obtain $\sigma_{avg_{watch}}$.

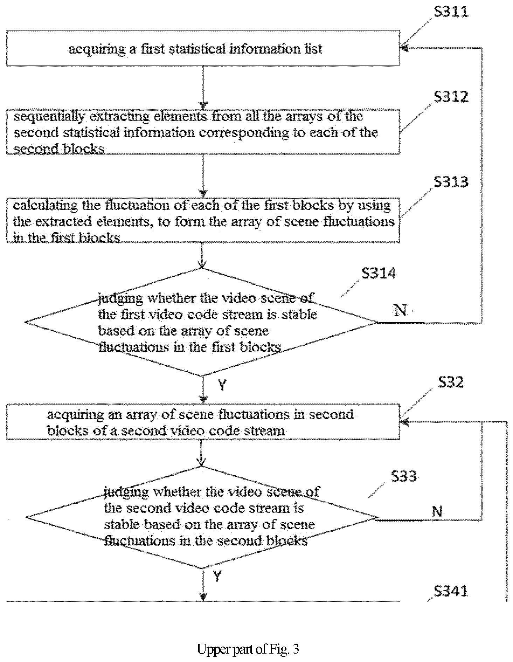

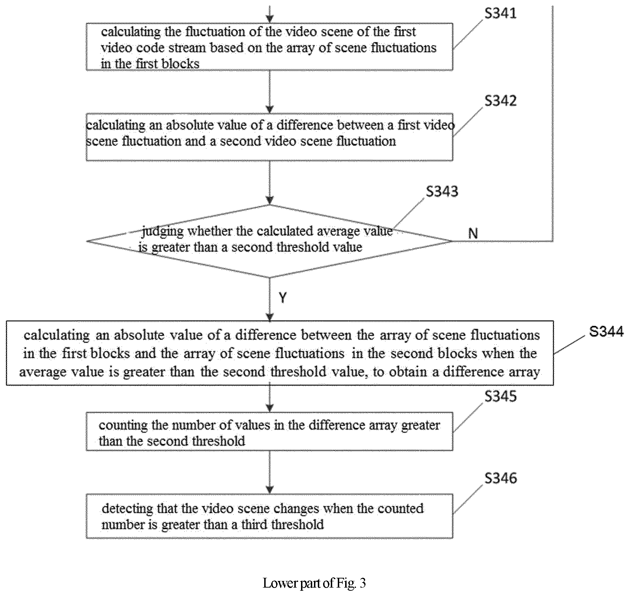

The embodiment of the present application also provides a method for detecting video image change, as shown in Fig. 3, the method includes:

S31: acquiring an array of scene fluctuations in first blocks of a first video code stream.

The video scene of the first video code stream is stable, the first video code stream comprises a first preset number of reference video frames, elements of the array of scene fluctuations in the first blocks is quantitatively equal to the first blocks divided from the reference video frames, each of the elements is used for representing the fluctuations of all the first blocks at the same position in all the reference video frames, and the fluctuations are used for representing a change degree of the scene.

Specifically, the method comprises the following steps:

S311: acquiring a first statistical information list.

The first statistical information list includes a first preset number of arrays of first statistical information, which correspond to the reference video frame one by one, and the elements of the arrays of the first statistical information, which correspond to the second blocks of the reference video frame one by one, are used for representing the scene statistical values of each first block.

$SL_{ref} = \{S_{ref}1, S_{ref}2, S_{ref}3,..., S_{ref}q, \cdots, S_{ref}c_1\}$, wherein $SL_{ref}$ is the first statistical information list and $S_{ref}q$ is a $q^{th}$ array of first statistical information in the first statistical information list, that is, the array of first statistical information corresponding to a $k^{th}$ reference video frame in the first video code stream. As $S_{ref}q$ is an $M \times N$ two-dimensional array, $SL_{ref}$ is a three-dimensional array, with three dimensions thereof being frames, rows and columns respectively. For example, $S_{ref}(q,i,j)$ is the statistical information of the $i^{th}$ row and the $j^{th}$ column of the $q^{th}$ frame in the first statistical information list, wherein $1 \le q \le c_1$.

S312, sequentially extracting elements from all the arrays of the second statistical information corresponding to each of the second blocks.

Sequentially extracting $S_{ref}(1, i, j), S_{ref}(2, i, j), \cdots, S_{ref}(q, i, j), \cdots, S_{ref}(c_1, i, j)$, wherein, $1 \le i \le M, 1 \le j \le N$.

S313, calculating the fluctuation of each of the first blocks by using the extracted elements, to form the array of scene fluctuations in the first blocks.

The video capturing device uses the extracted elements to calculate the fluctuation of each first block, that is, the fluctuation of the first block is calculated by the following formula:

$$\sigma_{SL_{ref}}(i, j) = \sqrt{\overline{S'(i, j)^2} - \overline{S'(i, j)}^2}\quad,$$

$$\overline{S'^2_{i,j}} = \frac{\sum_{q=1}^{c_1} S_{ref}(q,i,j)^2}{c_1}\quad, \qquad \overline{S'_{i,j}} = \frac{\sum_{q=1}^{c_1} S_{ref}(q,i,j)}{c_1}\quad.$$

wherein

In the above formula, $c_1$ is the first preset number, and $S_{ref}(q, i, j)$ is the element in an $i^{th}$ row and $j^{th}$ column of a $q^{th}$ array of first statistical information in the first statistical information list, and $\sigma_{SL_{ref}}(i, j)$ is the element in an $i^{th}$ row and $j^{th}$ column of the array of scene fluctuations in first blocks.

Specifically, the array of scene fluctuations in first blocks can be expressed as follows:

$$\sigma_{SL_{ref}} = \begin{bmatrix} \sigma_{SL_{ref}}(1,1) & \cdots & \sigma_{SL_{ref}}(1,j) & \cdots & \sigma_{SL_{ref}}(1,N) \\ \cdots & \cdots & \cdots & \cdots \\ \sigma_{SL_{ref}}(i,1) & \cdots & \sigma_{SL_{ref}}(i,j) & \cdots & \sigma_{SL_{ref}}(i,N) \\ \cdots & \cdots & \cdots & \cdots \\ \sigma_{SL_{ref}}(M,1) & \cdots & \sigma_{SL_{ref}}(M,j) & \cdots & \sigma_{SL_{ref}}(M,N) \end{bmatrix};$$

wherein, $1 \leq i \leq M,\ 1 \leq j \leq N$

S314: judging whether the video scene of the first video code stream is stable based on the array of scene fluctuations in the first blocks.

Specifically, the fluctuation of the video scene of the first video code stream is calculated by the following formula:

$$\sigma_{avg_{ref}} = \frac{\sum_{i=1}^{M}\sum_{j=1}^{N}\sigma_{SL_{ref}}(i,j)}{M \times N}$$

wherein M is the number of rows divided from the reference video frame, and N is the number of columns divided from the reference video frame, $\sigma_{SL_{ref}}(i,j)$ is the element in an $i^{th}$ row and a $j^{th}$ column in the array of scene fluctuations in first blocks, $\sigma_{avg_{ref}}$ is the fluctuation of the video scene of the first video code stream.

If $\sigma_{avg_{ref}}$ is less than $Th_{\sigma_{ref}}$, the video scene of the first video code stream is determined to be stable, and otherwise unstable, wherein $Th_{\sigma_{ref}}$ is the threshold for judging whether the video scene of the first video code stream is stable, which can be a constant and can be set according to the actual situation. If it is judged that the current first video code stream is unstable, returning to S331, otherwise executing the step S32.

Please refer to S22 to S23 of the embodiment shown in Fig. 2 for other specific processes, and they will not be repeated here.

S32: acquiring an array of scene fluctuations in second blocks of a second video code stream.

The second video code stream comprises a second preset number of watch video frames, elements of the array of scene fluctuations in the second blocks correspond to the second blocks divided from the watch video frames one by one, and each of the elements is used for representing fluctuations of the second blocks at the same position in all the watch video frames.

Please refer to S22 of the embodiment shown in Fig. 2 for details, which will not be repeated here.

S33, judging whether the video scene of the second video code stream is stable based on the array of scene fluctuations in the second blocks.

Please refer to S23 of the embodiment shown in Fig. 2 for details, which will not be repeated here.

S34, detecting the video scene changes by using the array of scene fluctuations in the first blocks and the array of scene fluctuations in the second blocks, when the video scene of the second video code stream is stable.

The video capturing device detects the change of the video scene through the following steps, specifically: S341, calculating the fluctuation of the video scene of the first video code stream based on the array of scene fluctuations in the first blocks.

The fluctuation $\sigma_{avg_{ref}}$ of the video scene of the first video code stream is the same as described in S314, and $\sigma_{avg_{ref}}$ can be directly extracted in this step.

S342: calculating an absolute value of a difference between a first video scene fluctuation and a second video scene fluctuation.

The first video scene fluctuation is the fluctuation of the video scene of the first video code stream and the second video scene fluctuation is the fluctuation of the video scene of the second video code stream. Specifically, the absolute value of the difference is calculated by the following formula:

$$\sigma_{avg_{diff}} = \left| \sigma_{avg_{ref}} - \sigma_{avg_{watch}} \right|;$$

$\sigma_{avg_{ref}}$ is the fluctuation of the video scene of the first video code stream, that is, the first video scene fluctuation; $\sigma_{avg_{watch}}$ is the fluctuation of the video scene of the second video code stream, that is, the second video scene fluctuation; $\sigma_{avg_{diff}}$ is the absolute value of the difference.

S343: judging whether the calculated average value is greater than a second threshold value.

S344 is executed if $\sigma_{avgdiff}$ is greater than $Th_{diff}$, otherwise, it is determined that the video scene has not changed, wherein $Th_{diff}$ is the second threshold.

S344, calculating an absolute value of a difference between the array of scene fluctuations in the first blocks and the array of scene fluctuations in the second blocks when the average value is greater than the second threshold value, to obtain a difference array.

Specifically, the difference array $\sigma_{diff}$ is a two-dimensional array of M×N, where $\sigma_{diff}(i, j)=|\sigma_{SL_{ref}}(i, j)-\sigma_{SL_{watch}}(i, j)|$, $\sigma_{diff}(i, j)$ is the element in the $i^{th}$ row and the $j^{th}$ column in the difference array, $1 \leq i \leq M, 1 \leq j \leq N$.

S345: counting the number of values in the difference array greater than the second threshold.

Sequentially judging whether each element in the difference array $\sigma_{diff}$ is greater than the second threshold, and if so, adding 1 to the statistical value, wherein the statistical value is $cnt_{change}$.

S346, detecting that the video scene changes when the counted number is greater than a third threshold.

The video capturing device determines that the video scene changes when $cnt_{change}$ is greater than the third threshold $Th_{cnt}$. Therefore, there are two necessary conditions for the changes of the video scene: (1) the absolute value of the difference in S343 is greater than the second threshold; (2) the number counted in S346 is greater than the third threshold. When both are met at the same time, it is confirmed that the video scene has changed; otherwise, the video scene is considered as unchanged, returning to S32 to continue to perform judgement.

Compared with the embodiment shown in Fig. 2, the method for detecting video scene changes provided by the embodiment of the present application uses the first video code stream with stable video scene as the standard to judge whether the video scene changes, then whether the second video code stream is stable or not is taken into account. According to the method, in a situation where the video scene is disturbed in a short time and quickly restored to the original state, the video scene is viewed as not have changed, so as to avoid frequently adjusting the parameters of the video capturing device and ensure the stability of the parameters of the video capturing device.

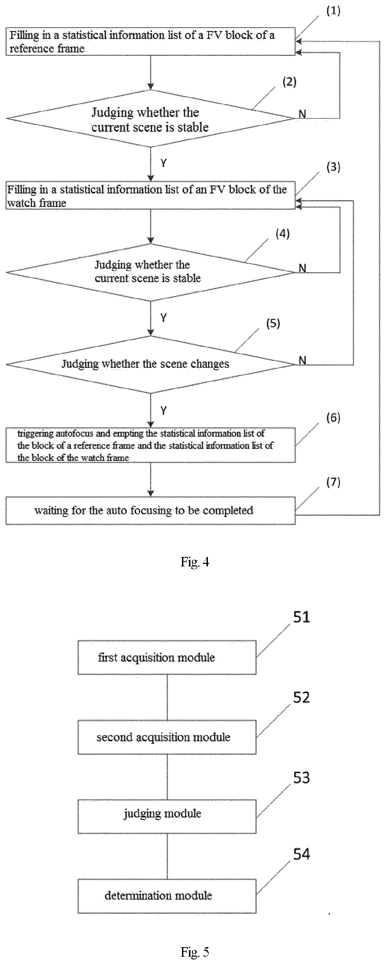

The embodiment of the present application also provides an application example of a method for detecting video scene change. As shown in Fig. 4, in this embodiment, block fv information is used to judge whether the autofocus scene changes, and if it changes, it is necessary to trigger autofocus.

The video capturing device comprises a video camera with electric zoom and auto-focus modules, a focusing lens group, a device (motor) for driving focusing, a definition value (FV) acquisition module, a data storage module and a calculation module.

(1) Filling in a statistical information list $SL_{ref}$ of a FV block of a reference frame, once every frame, and filling block statistical information $S_{new}$ of a new frame that is acquired into $SL_{ref}$, until $c_1$ ($c_1$ is a constant greater than 1) frames are fully filled. After the filling, calculating $\sigma_{SL_{ref}}$ and $\sigma_{avg_{ref}}$, otherwise continuing to wait for the block statistical information of the next frame and filling $SL_{ref}$. Here, when calculating the mean value $\sigma_{avg_{ref}}$ according to $\sigma_{SL_{ref}}$, weighting calculation can be carried out, by setting a weight array W (with a size of M rows and N columns, the same as that of $\sigma_{SL_{ref}}$), and performing weighted averaging of the array $\sigma_{SL_{ref}}$

(2) Judging whether the current scene is stable, if it satisfies $\sigma_{avg_{ref}} < Th_{\sigma_{ref}}$, then $SL_{ref}$ is considered stable, that is, the current scene is stable, then moving to the step of acquiring the statistical information list $SL_{watch}$ of blocks of the watch frame. Otherwise determining the statistical data to be unstable in this period of time, proceeding with step (1) and continuing to fill in $SL_{ref}$, by scrolling to refresh to cover the earliest frame of data in the array.

(3) Filling in a statistical information list $SL_{watch}$ of an FV block of the watch frame, with a method the same as that for the statistical information list $SL_{ref}$ of a block of a reference frame, by filling block statistical information $S_{new}$ of a new frame that is acquired into $SL_{watch}$, until $c_2$($c_1$ is a constant greater than 1) frames are fully filled. After filling, calculating $\sigma_{SL_{watch}}$ and $\sigma_{avg_{watch}}$, otherwise continuing to wait for the block statistical information of the next frame and filling $SL_{watch}$. Here, when calculating the mean value $\sigma_{avg_{watch}}$ according to $\sigma_{SL_{watch}}$, performing weighted averaging to the array $\sigma_{SL_{watch}}$ with a weight matrix W to obtain $\sigma_{avg_{watch}}$, if $\sigma_{SL_{ref}}$ is calculated through weighted averaging using the weight matrix W.

(4) Judging whether the current scene is stable. If it satisfies $\sigma_{avg_{watch}} < Th_{\sigma_{watch}}$, $SL_{watch}$ is considered stable, that is, the current scene is stable, then moving to the step of determining whether the scene changes, otherwise, the statistical data in this period of time is considered to be unstable, proceeding with step (3) and continuing to fill in $SL_{watch}$ by scrolling to refresh to cover the data of the earliest frame in the array.

(5) Judging whether the scene changes. There are two necessary conditions for judging whether the scene changes, one is to judge whether the average value of standard deviation of the block statistical information list changes, and the other is to judge whether the number $Cnt_{change}$ of blocks that undergo changes exceeds the threshold $Th_{cnt}$. If the above two conditions are met, it is considered that the scene changes, entering step (6). If the scene does not change, entering step (3), and continuing scrolling and filling in the statistical information list $SL_{watch}$ of the blocks of the watch frame.

(6) Informing the autofocus module that the scene has changed, that is, triggering autofocus and empting the statistical information list $SL_{ref}$ of the block of a reference frame and the statistical information list $SL_{watch}$ of the block of the watch frame.

(7) Moving to step (1) after the auto focusing is completed.

This embodiment also provides a device for detecting video scene changes, which is used to implement the above embodiments and preferable implementations, and those have been described will not be repeated herein. As used below, the term "module" may be a combination of software and/or hardware that implements a predetermined function. Although the apparatus described in the following embodiments is preferably implemented with software, the implementation of hardware, or a combination of software and hardware, can also be contemplated.

This embodiment provides a device for detecting video scene changes, as shown in Fig. 5, which comprises:

a first acquisition module 51, configured to acquire an array of scene fluctuations in first blocks of a first video code stream, wherein the video scene of the first video code stream is stable, the first video code stream comprises a first preset number of reference video frames, elements of the array of scene fluctuations in the first blocks quantitatively is equal to the first blocks divided from the reference video frames, each of the elements is used for representing the fluctuations of all the first blocks at the same position in all the reference video frames, and the fluctuations are used for representing a change degree of the scene;

a second acquisition module 52, configured to acquire an array of scene fluctuations in second blocks of a second video code stream, wherein the second video code stream comprises a second preset number of watch video frames, elements of the array of scene fluctuations in the second blocks correspond to the second blocks divided from the watch video frames one by one, and each of the elements is used for representing fluctuations of the second blocks at the same position in all the watch video frames;

a judging module 53, configured to judge whether the video scene of the second video code stream is stable based on the array of scene fluctuations in the second blocks; and

a determination module 54, configured to detect the video scene changes by using the array of scene fluctuations in the first blocks and the array of scene fluctuations in the second blocks, when the video scene of the second video code stream is stable.

According to the device for detecting video scene changes provided by the embodiment of the present application, whether the video scene is stable is determined through the fluctuation of the second block of the watch video frame, before detecting the change of the video scene. That is to say, the detected video scene is determined to be stable before detection of the changes of the video scene is carried out. This method uses the fluctuation of video scene to detect stability of the video scene, which can better eliminate the interference of noise generated by the video capturing device on the determination of video scene changes and improve the accuracy of detection of the video scene changes.

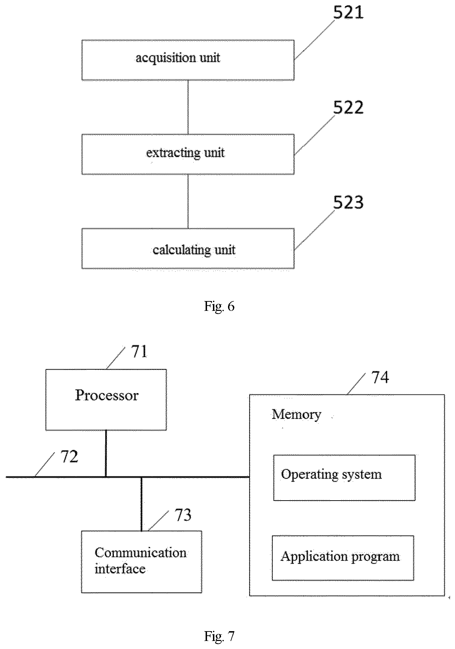

In some optional implementations of this embodiment, as shown in Fig. 6, the second acquisition module 52 includes:

an acquisition unit 521, configured to obtain the second statistical information list which includes a second preset number of array of second statistical information, which correspond to the watch video frames one by one, and the elements of the array of second statistical information, which correspond to the second blocks of the watch video frames one by one, are used for representing the scene statistical values of each second block;

an extracting unit 522, configured to sequentially extract elements from all the arrays of the second statistical information corresponding to each of the second blocks;

a calculating unit 523, configured to calculate the fluctuation of each of the second blocks by using the extracted elements, to form the array of scene fluctuations in the second blocks.

In other optional implementations of this embodiment, the following formulas are used to calculate the fluctuations of the second blocks:

$$\sigma_{SL_{watch}}(i, j) = \sqrt{\overline{S^{"}(i, j)^2} - \overline{S^{"}(i, j)}^2}$$ ,

$$\overline{S^{"}_{i,j}}^2 = \frac{\sum_{k=1}^{c_2} S_{watch}(k,i,j)^2}{c_2}$$ , $$\overline{S^{"}_{i,j}} = \frac{\sum_{k=1}^{c_2} S_{watch}(k,i,j)}{c_2}$$

wherein

In the above formula, $c_2$. is the second preset number, $S_{watch}(k, i, j)$ is an element in an $i^{th}$ row and a $j^{th}$ column of a $k^{th}$ array of second statistical information in the second statistical information list, and $\sigma_{SL_{watch}}(i, j)$ is an element in an $i^{th}$ row and a $j^{th}$ column of the array of scene fluctuations in the second blocks.

The device for detecting video scene changes in this embodiment is presented in the form of functional units, where the units refer to ASIC circuits, processors and memories that execute one or more software or fixed programs, and/or other devices that can provide the above functions.

Further functional descriptions of the above-mentioned modules are the same as those of the above-mentioned corresponding embodiments, and will not be repeated here.

An embodiment of the present application also provides a video capturing device, which is provided with a device for detecting video scene changes as shown in the above-mentioned Fig. 5 or Fig. 6.

Please refer to Fig. 7, which is a structural schematic diagram of a video capturing device provided by an optional embodiment of the present application. As shown in Fig. 7, the video capturing device may include at least one processor 71, for example, a central processing unit (CPU), at least one communication interface 74, memory 74, at least one communication bus 72. The communication bus 72 is used to implement connection and communication between these components. The communication interface 74 may include a display and a keyboard, the optional communication interface 74 may also include a standard wired interface and a wireless interface. The memory 74 may be a high-speed Random-Access-Memory or a volatile random access memory, or a non-volatile-memory, for example, at least one disk memory. Optionally, the memory 74 may also be at least one storage device located far from the aforementioned processor 71. The processor 71 can be combined with the device described in Fig. 5 or Fig. 6, the memory 74 stores an application program, and the processor 71 calls the program code stored in the memory 74 for executing any of the above method steps.

The communication bus 72 can be a peripheral-component-interconnect standard (PCI) bus or extended industry standard architecture (EISA) bus, etc., and can be divided into addresses bus, data bus, control bus, etc. For convenience of illustration, the bus is showed with only one thick line in Fig. 7, but it does not mean that there is only one bus or one type of bus.

The memory 74 may include a volatile-memory, for example, random-access-memory (RAM), and can also include non-volatile memory, such as flash memory, hard disk drive (HDD) or solid-state-drive (SSD), and the memory 74 also includes combinations of the above kinds of memories.

The processor 71 may be a central-processing-unit (CPU), a network processor (NP) or a combination of CPU and NP.

The processor 71 may further include a hardware chip, which can be application-specific integrated circuit (ASIC), programmable logic device (PLD) or their combination. The PLD can be a complex programmable logic device (CPLD), a field-programmable-gate-array (FPGA), a generic-array-logic (GAL) or any combination thereof.

Optionally, the memory 74 is also used to store program instructions. The processor 71 can call program instructions to implement the method for detecting video image changes shown in the embodiments illustrated by Figs. 1 to 4 of the present application.

The embodiment of the present application also provides a non-transient computer storage medium, wherein the computer storage medium stores computer executable instructions, which can execute the method for detecting video image changes in any of the above method embodiments. The storage medium can be magnetic disk, optical disk, a Read-Only Memory (ROM), a Random Access Memory (RAM), a Flash-Memory, a Hard-Disk-Drive (HDD), or a Solid-State-Drive (SSD), or combinations of the above kinds of memories.

Although the embodiments of this present application have been described with reference to the drawings, various modifications and variations can be made by those skilled in the art without departing from the spirit and scope of the present application, and such modifications and variations fall within the scope defined by the appended claims.

**Claims**

1.  A method for detecting video scene changes, **characterized in** comprising:

    acquiring an array of scene fluctuations in first blocks of a first video code stream, wherein the video scene of the first video code stream is stable, the first video code stream comprises a first preset number of reference video frames, elements of the array of scene fluctuations in the first blocks are quantitatively equal to the first blocks divided from the reference video frames, each of the elements is used for representing the fluctuations of all the first blocks at the same position in all the reference video frames, and the fluctuations are used for representing a change degree of the scene;
    acquiring an array of scene fluctuations in second blocks of a second video code stream, wherein the second video code stream comprises a second preset number of watch video frames, elements of the array of scene fluctuations in the second blocks correspond to the second blocks divided from the watch video frames one by one, and each of the elements is used for representing fluctuations of the second blocks at the same position in all the watch video frames;
    judging whether the video scene of the second video code stream is stable based on the array of scene fluctuations in the second blocks; and
    detecting the video scene changes by using the array of scene fluctuations in the first blocks and the array of scene fluctuations in the second blocks, when the video scene of the second video code stream is stable.

2.  The method according to claim 1, **characterized in that**, acquiring an array of scene fluctuations in second blocks of a second video code stream comprises:

    acquiring a second statistical information list, the second statistical information list comprising the second preset number of arrays of second statistical information, the arrays of second statistical information corresponding to the watch video frames one by one, and the elements of the arrays of the second statistical information corresponding to the second blocks of the watch video frames one by one, being used for representing scene statistical values of each of the second blocks;
    sequentially extracting elements from all the arrays of the second statistical information corresponding to each of the second blocks; and
    calculating the fluctuation of each of the second blocks by using the extracted elements, to form the array of scene fluctuations in the second blocks.

3.  The method according to claim 2, **characterized in that** the fluctuations of the second blocks are calculated by the following formula:

$$\sigma_{SL_{watch}}(i,j) = \sqrt{\overline{S_{i,j}^{''}{}^{2}} - \overline{S_{i,j}^{''}}{}^{2}} \,,$$

wherein ,
$$\overline{S_{i,j}^{''}{}^{2}} = \frac{\sum_{k=1}^{c_2} S_{k,i,j}^{''}{}^{2}}{c_2}\,, \quad \overline{S_{i,j}^{''}} = \frac{\sum_{k=1}^{c_2} S_{k,i,j}^{''}}{c_2}\,;$$
in the above formula, $c_2$. is the second preset number,

$S_{k,i,j}^{''}$ is an element in an $i^{th}$ row and a $j^{th}$ column of a $k^{th}$ array of the second statistical information in the second statistical information list, and $\sigma_{SL_{watch}}(i,j)$ is an element in an $i^{th}$ row and a $j^{th}$ column of the array of scene fluctuations in the second blocks.

4.  The method according to claim 3, **characterized in that** judging whether the video scene of the second video code stream is stable based on the array of scene fluctuations in the second blocks comprises:

    calculating an average value of all elements in the array of scene fluctuations in second blocks to obtain the fluctuation of the video scene of the second video code stream; and
    judging whether the video scene of the second video code stream is stable based on a magnitude relationship between the fluctuations of the video scene of the second video code stream and a first threshold.

5. The method according to claim 4, **characterized in that** the fluctuation of the video scene of the second video code stream is calculated by the following formula:

$$\sigma_{avg_{watch}} = \frac{\sum_{i=1}^{M} \sum_{j=1}^{N} \sigma_{SL_{watch}}(i, j)}{M \times N}$$

in the formula, M is the number of rows divided from the watch video frame, N is the number of columns divided from the watch video frame, and $\sigma_{avg_{watch}}$ is the fluctuations of the video scene of the second video code stream.

6. The method according to claim 1, **characterized in that** detecting the video scene changes by using the array of scene fluctuations in the first blocks and the array of scene fluctuations in the second blocks comprises:

calculating the fluctuation of the video scene of the first video code stream based on the array of scene fluctuations in the first blocks;
calculating an average value of a difference between a first video scene fluctuation and a second video scene fluctuation, wherein the first video scene fluctuation is the fluctuation of the video scene of the first video code stream and the second video scene fluctuation is the fluctuation of the video scene of the second video code stream;
judging whether the calculated average value is greater than a second threshold value;
calculating an absolute value of a difference between the array of scene fluctuations in the first blocks and the array of scene fluctuations in the second blocks when the average value is greater than the second threshold value, to obtain a difference array;
counting the number of values in the difference array greater than the second threshold; and
detecting that the video scene changes when the counted number is greater than a third threshold.

7. The method according to claim 6, **characterized in that**, the fluctuations of the video scene of the first video code stream is calculated by the following formula:

$$\sigma_{avg_{ref}} = \frac{\sum_{i=1}^{M} \sum_{j=1}^{N} \sigma_{SL_{ref}}(i, j)}{M \times N}$$

where M is the number of rows divided from the reference video frame, and N is the number of columns divided from the reference video frame, $\sigma_{SL_{ref}}(i, j)$ is an element in an $i^{th}$ row and a $j^{th}$ column of the array of scene fluctuations in the first blocks, and $\sigma_{avg_{ref}}$ is the fluctuation of the video scene of the first video code stream.

8. A device for detecting video scene changes, **characterized in** comprising:

a first acquisition module, configured to acquire an array of scene fluctuations in first blocks of a first video code stream, wherein the video scene of the first video code stream is stable, the first video code stream comprises a first preset number of reference video frames, elements of the array of scene fluctuations in the first blocks quantitatively is equal to the first blocks divided from the reference video frames, each of the elements is used for representing the fluctuations of all the first blocks at the same position in all the reference video frames, and the fluctuations are used for representing a change degree of the scene;
a second acquisition module, configured to acquire an array of scene fluctuations in second blocks of a second video code stream, wherein the second video code stream comprises a second preset number of watch video frames, elements of the array of scene fluctuations in the second blocks correspond to the second blocks divided from the watch video frames one by one, and each of the elements is used for representing fluctuations of the second blocks at the same position in all the watch video frames;
a judging module, configured to judge whether the video scene of the second video code stream is stable based on the array of scene fluctuations in the second blocks; and
a determination module, configured to detect the video scene changes by using the array of scene fluctuations in the first blocks and the array of scene fluctuations in the second blocks, when the video scene of the second video code stream is stable.

9. A video capturing device, **characterized in** comprising: at least one processor, and a memory communicatively connected with the at least one processor, wherein the memory stores instructions executable by the one processor, and the instructions are executed by the at least one processor to cause the at least one processor to execute the method for detecting video scene changes according to any one of claims 1-7.

10. A computer-readable storage medium, storing computer instructions thereon, **characterized in that**, the instructions, when executed by a processor, execute the steps of the method for detecting video scene changes according to any one of claims 1-7.

acquiring an array of scene fluctuations in
first blocks of a first video code stream — S11

acquiring an array of scene fluctuations in
second blocks of a second video code stream — S12

judging whether the video scene of the
second video code stream is stable
based on the array of scene fluctuations
in the second blocks — S13

N → Other operations

Y

detecting the video scene changes by using
the array of scene fluctuations in the first
blocks and the array of scene fluctuations in
the second blocks — S14

Fig. 1

S21

acquiring an array of scene fluctuations in first blocks of a first video code stream

S22

acquiring a second statistical information list

S221

sequentially extracting elements from all the arrays of the second statistical information corresponding to each of the second blocks

S222

calculating the fluctuation of each of the second blocks by using the extracted elements, to form the array of scene fluctuations in the second blocks

S223

calculating an average value of all elements in the array of scene fluctuations in the second blocks to obtain the fluctuation of the video scene of the second video code stream

S231

judging whether the video scene of the second video code stream is stable based on a magnitude relationship between the fluctuations of the video scene of the second video code stream and a first threshold

S232

N

S23

Y

detecting the video scene changes by using the array of scene fluctuations in the first blocks and the array of scene fluctuations in the second blocks, when the video scene of the second video code stream is stable

S24

Fig. 2

S311

acquiring a first statistical information list

S312

sequentially extracting elements from all the arrays of the
second statistical information corresponding to each of the
second blocks

S313

calculating the fluctuation of each of the first blocks by using
the extracted elements, to form the array of scene fluctuations
in the first blocks

S314

judging whether the video scene of
the first video code stream is stable
based on the array of scene
fluctuations in the first blocks

N

Y

S32

acquiring an array of scene fluctuations in second
blocks of a second video code stream

S33

judging whether the video scene of
the second video code stream is
stable based on the array of scene
fluctuations in the second blocks

N

Y

S341

Upper part of Fig. 3

S341

calculating the fluctuation of the video scene of the first
video code stream based on the array of scene fluctuations
in the first blocks

S342

calculating an absolute value of a difference between a first video
scene fluctuation and a second video scene fluctuation

S343

judging whether the calculated average value
is greater than a second threshold value                    N

Y

S344

calculating an absolute value of a difference between the array of scene fluctuations
in the first blocks and the array of scene fluctuations in the second blocks when the
average value is greater than the second threshold value, to obtain a difference array

S345

counting the number of values in the difference array greater
than the second threshold

S346

detecting that the video scene changes when the counted
number is greater than a third threshold

Lower part of Fig. 3

(1)

Filling in a statistical information list of a FV block of a reference frame

(2)

Judging whether the current scene is stable — N

Y

(3)

Filling in a statistical information list of an FV block of the watch frame

(4)

Judging whether the current scene is stable — N

Y

(5)

Judging whether the scene changes — N

Y

(6)

triggering autofocus and empting the statistical information list of the block of a reference frame and the statistical information list of the block of the watch frame

(7)

waiting for the auto focusing to be completed

Fig. 4

51

first acquisition module

52

second acquisition module

53

judging module

54

determination module

Fig. 5

521

acquisition unit

522

extracting unit

523

calculating unit

Fig. 6

71

Processor

74

Memory

72

Operating system

73

Communication
interface

Application program

Fig. 7

## INTERNATIONAL SEARCH REPORT

| International application No. |
| --- |
| **PCT/CN2019/107936** |

| A. | CLASSIFICATION OF SUBJECT MATTER |
| --- | --- |
| | H04N 19/142(2014.01)i;  H04N 19/176(2014.01)i;  H04N 7/18(2006.01)i;  H04N 5/14(2006.01)i |

According to International Patent Classification (IPC) or to both national classification and IPC

| B. | FIELDS SEARCHED |
| --- | --- |

Minimum documentation searched (classification system followed by classification symbols)

    H04N

Documentation searched other than minimum documentation to the extent that such documents are included in the fields searched

Electronic data base consulted during the international search (name of data base and, where practicable, search terms used)

    CNPAT, CNKI, WPI, EPODOC, IEEE: 科达, 视频, 图像, 帧, 场景, 变化, 变换, 切换, 区, 块, 均值, 方差, 标准差, 检测, 噪声, 清晰度, 阈值, 阀值, 门限, video, frame, image, scene, change, switch, area, block, average, area, block, variance, std, standard, deviation, detect, noise, definition, threshold

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 109168001 A (SUZHOU KEDACOM TECHNOLOGY CO., LTD.) 08 January 2019 (2019-01-08)<br>    entire document | 1-10 |
| A | CN 104270553 A (BEIJING QIYI CENTURY SCIENCE & TECHNOLOGY CO., LTD.) 07 January 2015 (2015-01-07)<br>    description, paragraphs [0058]-[0115], and figures 1-4 | 1-10 |
| A | CN 104811586 A (FUJIAN STAR NET SECURITY TECHNOLOGY CO., LTD.) 29 July 2015 (2015-07-29)<br>    entire document | 1-10 |
| A | CN 104168462 A (CHONGQING UNIVERSITY) 26 November 2014 (2014-11-26)<br>    entire document | 1-10 |
| A | CN 104796660 A (TENCENT TECHNOLOGY SHENZHEN CO., LTD.) 22 July 2015 (2015-07-22)<br>    entire document | 1-10 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 November 2019** | **27 November 2019** |

| Name and mailing address of the ISA/CN | Authorized officer |
| --- | --- |
| **China National Intellectual Property Administration**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2019/107936** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2013225728 A (SHARP K. K.) 31 October 2013 (2013-10-31)<br>    entire document | 1-10 |
| A | US 2003228056 A1 (PULSENT CORP.) 11 December 2003 (2003-12-11)<br>    entire document | 1-10 |
| A | BINDU, R. et al. "Comparison of Scene Change Detection Algorithms for Videos"<br>*2015 Fifth International Conference on Advanced Computing & Communication<br>Technologies,* 31 December 2015 (2015-12-31),<br>    entire document | 1-10 |

Form PCT/ISA/210 (second sheet) (January 2015)

**INTERNATIONAL SEARCH REPORT**
Information on patent family members

International application No.

**PCT/CN2019/107936**

| Patent document cited in search report | | | Publication date (day/month/year) | Patent family member(s) | | | Publication date (day/month/year) |
|---|---|---|---|---|---|---|---|
| CN | 109168001 | A | 08 January 2019 | None | | | |
| CN | 104270553 | A | 07 January 2015 | CN | 104270553 | B | 08 December 2017 |
| CN | 104811586 | A | 29 July 2015 | CN | 104811586 | B | 16 January 2018 |
| CN | 104168462 | A | 26 November 2014 | CN | 104168462 | B | 13 June 2017 |
| CN | 104796660 | A | 22 July 2015 | CN | 104796660 | B | 23 October 2018 |
| JP | 2013225728 | A | 31 October 2013 | None | | | |
| US | 2003228056 | A1 | 11 December 2003 | US | 6985623 | B2 | 10 January 2006 |

Form PCT/ISA/210 (patent family annex) (January 2015)